# EUROPEAN PATENT APPLICATION

(11) **EP 0 798 270 A1**
(43) Date of publication of application: **01.10.1997**
(21) Application number: 96914219.9
(22) Date of filing: 27.05.1996
(51) Int. Cl.: C02F 1/30

(54) **LASER DEVICE FOR PURIFYING CONTAMINATED WATERS**

(30) Priority: 26.05.1995 ES 9501023
(71) Applicant: Fernandez Fernandez, Marcelino, 33207 Gijon (ES)
(72) Inventor: Fernandez Fernandez, Marcelino, 33207 Gijon (ES)
(74) Representative: Lahidalga de Careaga, Jose Luis
(86) International application number: ES9600120
(87) International publication number: WO9637439

(57) **Abstract**

Laser device for the purification of contaminated waters, comprising the use of lasers within the infrared radiation spectrum, such as pulsed continuous wave YAG-doped neodymium (neodymium pumped diode), as well as CO₂ lasers, between the limits from 0.8 µm to 11 µm, which, in a static position within a closed site or on a crane, irradiate the mass of water. The enclosures have different shapes, and use magnetized sheets to collect metal impurities, in addition to the purification of other types of contaminations, by irradiating the surface through the penetration inside the liquid mass in order to destroy bacteriological micro-organisms contained in the liquid mass.

## Description

When the degree of pollution in the water exceeds certain limits, the use of ultraviolet radiation is insufficient, whereas infrared radiation has a greater destructive power and has never been used previously, as described in this patent, in transmissions across great widths of water. In some cases, ceramics which emit infrared radiation have been employed, in combination with magnetic effects, but lasers have not been employed within the limits exposed in the present patent.
On the other hand, great expectations have been created by the range of lasers which have been constructed, which have not been complemented with the corresponding experimental applications. Ceramics require being heated to temperatures of many hundreds of degrees, hence being the consumption of electrical energy excessive. Additionally, due to the fact that the heating of the ceramic has to be constant, which involves a reduction in the amount of dissolved oxygen in the water, they also cause a reduction in the quality of the water. Regarding the use of ozone, this is a powerful agent, but less suited for use on drinking water because of its action as an oxidant. Regarding chlorination, this introduces chemical agents into the water which reduce its quality, whereas with the use of infrared radiation, bacteria and other microorganisms are eliminated without the generation of these effects. Due to all the previously exposed reasons, this patent represents an improvement in relation to the prior art.

### DESCRIPTION OF THE INVENTION

This device is characterized by the use of lasers in the infrared radiation spectrum, including the pulsed or continuous wave neodymium lasers (neodymium pumped diode), as well as CO₂ lasers, always within the limits of 0.8 µm - 11 µm, being the absorption coefficient for the neodymium laser, in an aquatic medium, smaller than that for the CO₂ laser, being that for both similar in air. These lasers are placed over the surface of the water so that by action of the neodymium radiation, convective thermal instabilities are produced, creating currents which, on reducing the density, rise to the surface, wherein they are ultrapurified by the CO₂ laser. Prior to this, within the bulk of the water body, the contaminating elements have already been partially eliminated by the neodymium laser. It is also possible to use the neodymium laser on its own. In this case, it is possible to use CaF₂ lenses, or other transparent materials, for the radiation of the neodymium laser.

### DESCRIPTION OF THE FIGURES

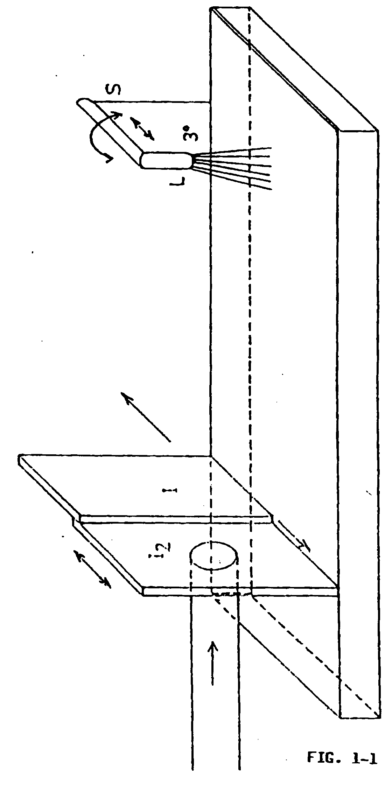

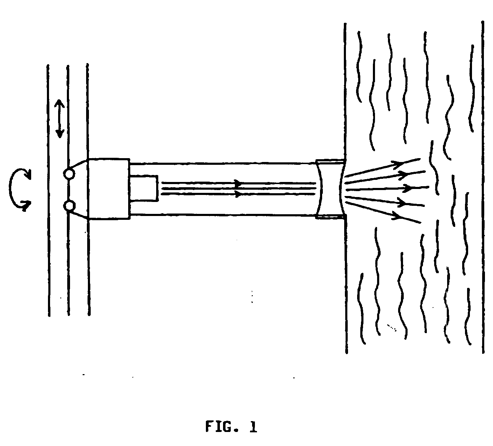

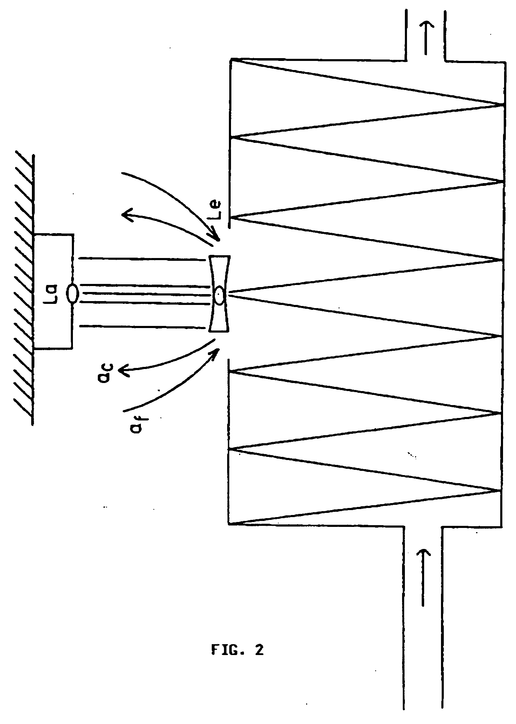

Figure 1-1 shows the placing of two magnetized plates in such a way that, as water flows through, and due to their proximity to the water pipe, the same spreads upon their surface, which attracts the metallic particles which, in turn, are retained by the magnetized plates. These plates may be moved so that plate I₂ removes the metals captured by plate I by way of exerting a stronger magnetic attraction upon the metallic contaminant particles which have deposited on I. Said magnetized plates are fitted in a sliding device with tracks which moves automatically. Subsequently, the water is irradiated by a neodymium laser of wavelength λ = 1,06, which, being mounted on support S, can be placed sufficiently near to the surface of water to purify the same, being it possible to employ for this purpose a CO₂ laser and/or a neodymium laser (Fig. 1-1). In Figure 2, water runs into a deposit which is subjected to infrared radiation of wavelength λ = 1,06 µm.
Wavelengths within the infrared spectrum between the limits of 0.8 µm and 11 µm can also be used.
The base of the deposit is constituted by a plate made of white aluminium (Al), copper (Cu) and other materials which are reflective at these infrared wavelengths. These materials favor reflection, having the effect of multiplying the purifying action of the radiation of the neodymium laser. The laser remains fixed and approaches an opening, of variable width, so as to originate an instability in the air, warm air (a_{w}) which rises, and cold air (a_{c}), which oxygenates the surface of the water.

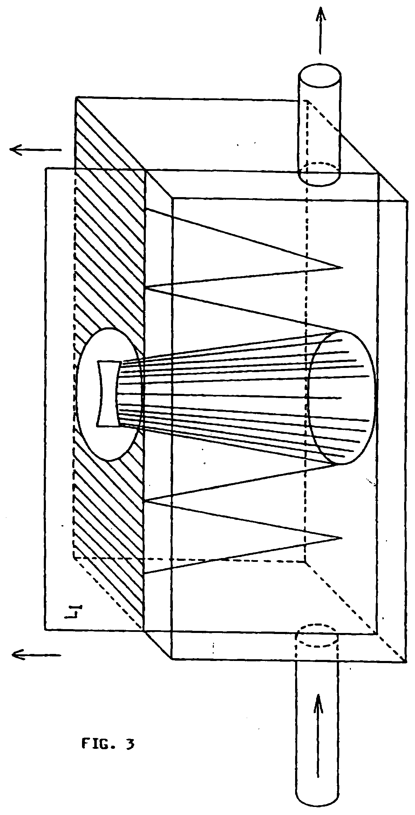

In Figure 3, the divergent lens may be formed by different materials which are transparent to infrared radiation, such as CaF₂, SeZn, germanium, etc. Some magnetized plates L_{I}, which can be moved within a sliding device with tracks, are placed here. These magnetized plates gather the metallic impurities which approach favored by the convective instabilities produced by the infrared radiation laser of wavelength λ = 1,06 µm.

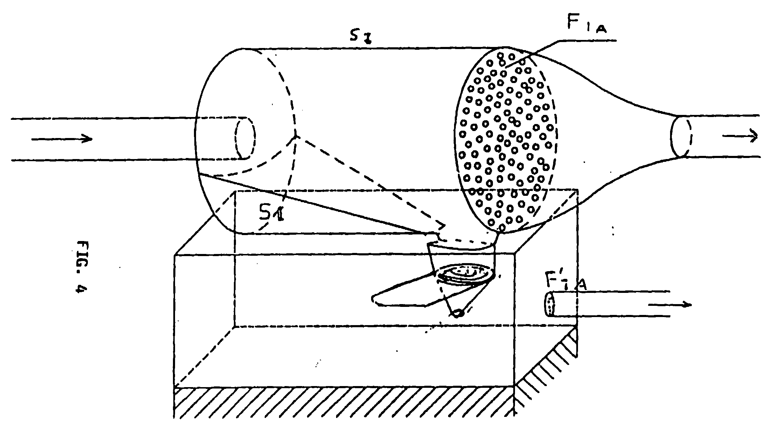

In figure 4, the water pipe extends into a widened section. The same has a magnetized plate, in its lower section, which repels the lead particles, in addition to filter F_{IA}, which is constituted by a network of fine holes across which the water flows through, at the same time as lead is repelled, due it to being a diamagnetic material, in such a way that the lead particles are deposited in the lowermost part of the widening. Periodically, a channel, which the widening bears in this part, is opened so that the lead gathered discharges into the deposit placed at the lower section of Figure 4, which is represented in a prism-like shape. This deposit has a small magnetized exit filter, F'_{IA}, which repels lead particles. This filter is placed at a certain height from the base, and has a small volume of water emerging from it. The water with a high lead concentration can be isolated and stored.
If an ultraviolet laser is placed together with the neodymium laser, the neodymium laser produces convective instabilities which rise to the surface and the ultraviolet laser, in turn, mixes the ozone produced by oxygen in the air, with the bodies of water which are continuously rising to the surface, producing a multiple purification effect mediated by ozone and by the action of the neodymium laser within the volume of water. As a result of this, bacteria, fungi and viruses are destroyed, and water is dechlorinated, which can subsequently be employed in the manufacture of carbonated drinks and in other applications.
It is considered unnecessary to elaborate any further in the description for any expert in the art to understand the scope of the invention and the advantages which are derived from the same. The materials, shape, size, and arrangement of the elements are susceptible of variation, as long as this does not imply an alteration in the essence of the invention.
The terms in which this report has been described shall always be taken in a broad sense, and never as limiting.

## Claims

1. Laser-equipped device for the purification of polluted waters, characterized in that it employs lasers in the infrared radiation spectrum, including pulsed or continuous wave neodymium lasers (neodymium pumped diode), as well as CO₂ lasers, within the limits of 0.8 µm and 11 µm.

2. Laser-equipped device for the purification of polluted waters, according to claim 1, characterized in that it uses infrared radiation which exhibits a decreasing transmission from 0.8 µm to 11 µm across the water which is to be treated and purified, and in that, in this way, the contaminating matter is destroyed, in a manner directly related to the intensity of the radiation, by a sudden heating effect, due to the fact that the same does not transmit said radiation, being it also possible to expose, to said radiation, contaminated water contained in closed vessels, the bases and upper walls of which are lined with a material which reflects these radiations, so that a multiplicative effect is achieved when the radiation reflects on the upper and lower sections of the containers.

3. Laser-equipped device for the purification of polluted waters, according to claims 1 and 2, characterized in that it combines the effects of infrared radiation with magnetic effects, with the object of filtering, treating and purifying the water contained in the various vessels used in conjunction with this device, considering that the polluting matter may be organic, constituted by metallic particles, or comprise both types of contamination at a time, following a continuous process.

4. Laser-equipped device for the purification of polluted waters, according to claims 1, 2 and 3, for the treatment and disinfection of polluted water or other liquids such as dairy products or blood.
